# EUROPEAN PATENT APPLICATION

(11) **EP 2 990 088 A1**
(43) Date of publication of application: **02.03.2016**
(21) Application number: 13882654.0
(22) Date of filing: 05.07.2013
(51) Int. Cl.: B01D 29/39

(54) **RETAINER FOR FILTER, AND FILTER USING SAME**

(30) Priority: 26.04.2013 JP 2013093489
(71) Applicant: Nagase Filter Co., Ltd., Higashiosaka-shi, Osaka 578-0984 (JP); Kabushiki Kaisha Toukai Spring Seisakusho, Gifu 5090135 (JP)
(72) Inventor: HAYASHI HIDEKI, Higashiosaka-shi Osaka 578-0984 (JP); MAEKAWA Ryuichi, Higashiosaka-shi Osaka 578-0984 (JP); BIZEN Masakazu, Higashiosaka-shi Osaka 578-0984 (JP); HORI Shigehiro, Kakamigahara-shi Gifu 509-0135 (JP); HATANAKA Akihiro, Kakamigahara-shi Gifu 509-0135 (JP)
(74) Representative: Piésold, Alexander James
(86) International application number: PCT/JP2013/068464
(87) International publication number: WO 2014/174690

(57) **Abstract**

The present invention provides a filter retainer capable of suppressing the retention of a filtered fluid. The filter retainer is a filter retainer (10) that forms flow paths (11) by being sandwiched between two filter media, wherein the filter retainer (10) is an approximately circular-shaped plate having the flow paths (11) on both surfaces thereof, and in the radial direction of the filter retainer (10), the vertical cross-sectional area of each flow path (11) on the outer peripheral side is smaller than that on the center side. In the filter retainer (10) according to the present invention, each flow path (11) is narrower on the outer peripheral side than on the center side. Therefore, the filtered fluid flows at a higher flow rate on the outer peripheral side, so that the retention of the filtered fluid is suppressed.

## Description

### Technical Field

The present invention relates to a filter retainer and a filter using the same.

### Background Art

As a filter for filtration of a molten polymer or a viscous fluid, a disk-shaped filter has been known. In such a filter, in many cases, a retainer composed of a wire net or the like, for supporting filter media, is arranged at the center part in the thickness direction of the filter. Also, in many cases, the filter is configured so that porous plates (e.g., perforated metal sheets) are arranged on both surfaces of the retainer, and filter media are overlaid on the porous plates. A plurality of such filters are laminated via spacers, for example. A fluid to be filtrated flowing into the gaps between the filters passes through the filter media to be filtrated. The filtered fluid then reaches the retainer portion via the porous bodies, and flows inside the retainer portion in the radial direction (for example, a direction toward the center in the radial direction) to gather in the center portion or the like of the laminated filters. The filtered fluid is then transferred to a predetermined destination (for example, see Patent Documents 1 to 3).

### Citation List

### Patent Documents

Patent Document 1: JP H8 (1996)-10521 A
Patent Document 2: JP H11 (1999)-76721 A
Patent Document 3: JP 2001-9213 A

### Summary of Invention

### Problem to be Solved by the Invention

In a filter element having the above-described configuration, the filtered fluid having flown into the retainer portion flows in the radial direction through both the surfaces and the inside of the retainer. However, when the retainer is composed of the wire net or the like, the shape of each flow path is complicated, so that the retention of the filtered fluid in the retainer is prone to be generated.

Moreover, in the filter element having the above-described configuration, metal wires of the wire net composing the retainer may be positioned immediately below pores of the porous bodies. Also from this viewpoint, the retention of the filtered fluid in the retainer is prone to be generated.

With the foregoing in mind, the present invention is intended to provide a filter retainer capable of suppressing the retention of a filtered fluid and a filter using the same.

### Means for Solving Problem

In order to achieve the aforementioned object, the filter retainer according to the present invention is a filter retainer that forms flow paths by being sandwiched between two filter media, wherein the filter retainer is an approximately circular-shaped plate having the flow paths on both surfaces thereof, and in a radial direction of the filter retainer, a vertical cross-sectional area of each flow path on an outer peripheral side is smaller than that on a center side.

The filter according to the present invention is a filter including: a filter retainer; and filter media on both surfaces of the filter retainer, wherein the filter retainer is the filter retainer according to the present invention.

### Effects of the Invention

In the filter retainer according to the present invention, the vertical cross-sectional area of each flow path on the outer peripheral side is smaller than that on the center side. Therefore, the flow rate of the fluid to be filtrated on the outer peripheral side is increased, and the retention of the fluid to be filtrated is suppressed.

### Brief Description of Drawings

[FIG. 1] FIG. 1 is a perspective view showing a part of an example of a filter retainer according to the first embodiment of the present invention.
[FIG. 2] FIG. 2 is a perspective view showing another example of the filter retainer according to the first embodiment of the present invention.
[FIG. 3] FIG. 3 is a perspective view showing still another example of the filter retainer according to the first embodiment of the present invention.

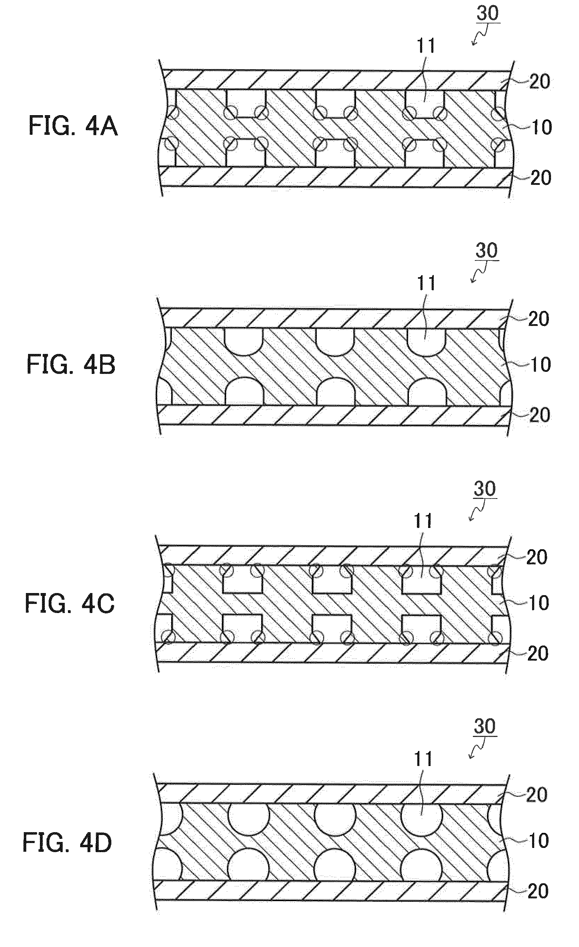

[FIG. 4] FIG. 4A is a cross-sectional view showing an example of a filter using the filter retainer according to the first embodiment of the present invention. FIG. 4B is a cross-sectional view showing another example of a filter using the filter retainer according to the first embodiment of the present invention. FIG. 4C is a cross-sectional view showing still another example of a filter using the filter retainer according to the first embodiment of the present invention. FIG. 4D is a cross-sectional view showing yet another example of a filter using the filter retainer according to the first embodiment of the present invention.
[FIG. 5] FIG. 5 is a perspective view showing a filter retainer according to the second embodiment of the present invention.
[FIG. 6] FIG. 6 is a cross-sectional view showing an example of a filter using a conventional filter retainer.

### Description of Embodiments

The filter retainer according to the present invention may be configured so that grooves are formed as the flow paths on both the surfaces of the filter retainer, and in the radial direction of the filter retainer, the width of each groove on the outer peripheral side is broader than that on the center side, so that the vertical cross-sectional area of each flow path on the outer peripheral side is smaller than that on the center side.

The filter retainer according to the present invention also may be configured so that grooves are formed as the flow paths on both the surfaces of the filter retainer, and in the radial direction of the filter retainer, the depth of each groove on the outer peripheral side is shallower than that on the center side, so that the vertical cross-sectional area of each flow path on the outer peripheral side is smaller than that on the center side.

The filter retainer according to the present invention also may be configured so that columnar projections are formed on both the surfaces of the filter retainer, and in the radial direction of the filter retainer, the number of the projections per unit area on the outer peripheral side is greater than that on the center side, so that the vertical cross-sectional area of each flow path on the outer peripheral side is smaller than that on the center side.

In the filter retainer according to the present invention, it is preferred that, in a cross section of each flow path, an angle formed between a side wall and a bottom of the flow path is an obtuse angle, or the side wall and the bottom of the flow path are connected so as to be in an arc shape.

The filter retainer according to the present invention may be configured so that, in a cross section of each flow path, at least a bottom of the flow path is in an arc shape.

In the filter retainer according to the present invention, it is preferred that the flow paths are formed by chemical etching.

In the filter according to the present invention, it is preferred that an angle formed between each filter medium and a side wall of each flow path of the filter retainer is an obtuse angle, or each flow path of the filter retainer and each filter medium are connected so as to be in an arc shape.

The filter retainer and the filter using the same according to the present invention are described in detail below with reference to illustrative examples. It is to be noted, however, that the present invention is not limited by the following embodiments. In the drawings to be described below, identical parts are denoted by identical reference numerals. Moreover, it is to be noted that the structures of some components may be simplified in the drawings, and dimensional ratios of components may differ from the actual ratios, for the sake of convenience in illustration.

### (First embodiment)

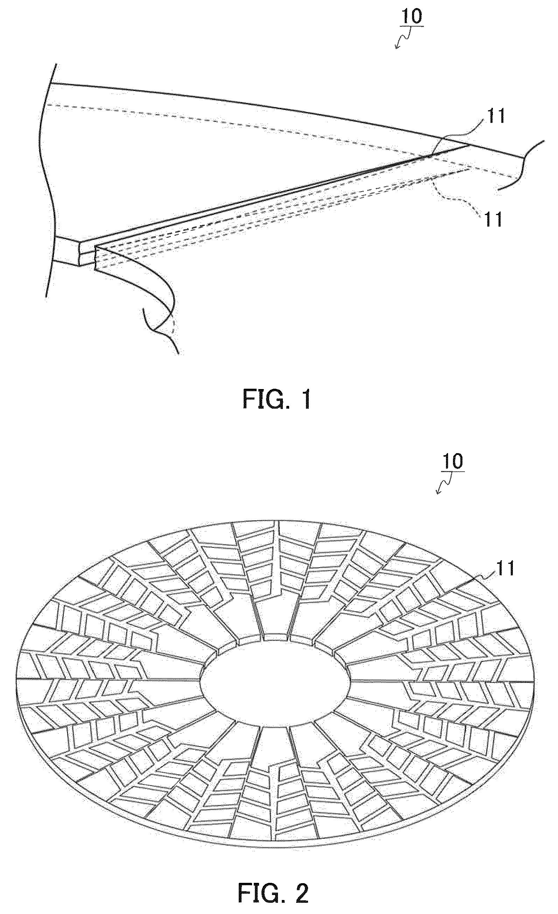

FIG. 1 is a perspective view showing a part of an example of a filter retainer according to the present embodiment. As shown in FIG. 1, the filter retainer 10 according to the present embodiment is an approximately circular-shaped plate having grooves 11 formed as flow paths on both surfaces thereof.

A material for forming the filter retainer 10 is not particularly limited. From the viewpoint of anticorrosion properties, mechanical strength, and heat resistance properties, a stainless steel (SUS) plate can be used, for example. The size of the filter retainer 10 may be as follows, for example: the diameter is in the range from 50 to 500 mm and the thickness is in the range from 1 to 10 mm; preferably, the diameter is in the range from 75 to 450 mm and the thickness is in the range from 1.5 to 8 mm; and more preferably, the diameter is in the range from 100 to 400 mm and the thickness is in the range from 2 to 6 mm.

The width and the depth of each of the two grooves (flow paths) 11 formed on both surfaces of the filter retainer 10 are reduced from the center toward the outer side in the radial direction. With this configuration, in the radial direction of the filter retainer 10 according to the present embodiment, the vertical cross-sectional area of each flow path 11 on the outer peripheral side is smaller than that on the center side. A filtrated fluid flows from the outer peripheral side toward the center side in each groove (flow path) 11.

The center side end of each groove (flow path) 11 has a width in the range from, for example, 0.5 to 6 mm, preferably 1 to 4 mm, and more preferably 1.5 to 2 mm. The outer side end of each groove (flow path) 11 has a width in the range from, for example, 0 to 2 mm, preferably 0.2 to 1.5 mm, and more preferably 0.5 to 1 mm.

The center side end of each groove (flow path) 11 has a depth in the range from, for example, 0.5 to 5 mm, preferably 1 to 4.5 mm, and more preferably 1.5 to 4 mm. As shown in FIG. 1, the depth of the center side end of each groove (flow path) 11 may be half the thickness of the filter retainer 10, and the two grooves (flow paths) 11 formed on both the surfaces of the filter retainer 10 may be integrated at the center side ends. It is to be noted, however, that the filter retainer 10 according to the present embodiment is not limited thereto, and the depth at the center side end of each groove (flow path) 11 may be less than half the thickness of the filter retainer 10. The outer side end of each groove (flow path) 11 has a depth in the range from, for example, 0 to 2 mm, preferably 0.2 to 1.5 mm, and more preferably 0.3 to 1 mm.

Although FIG. 1 shows the state where only two grooves (flow paths) 11 are formed (with one groove on each surface of the filter retainer 10) for simplicity in illustration, a plurality of grooves (flow paths) 11 are actually arranged at equal intervals along the circumferential direction on each surface of the filter retainer 10. The number of the grooves (flow paths) 11 on each surface of the filter retainer 10 is, for example, in the range from 20 to 360.

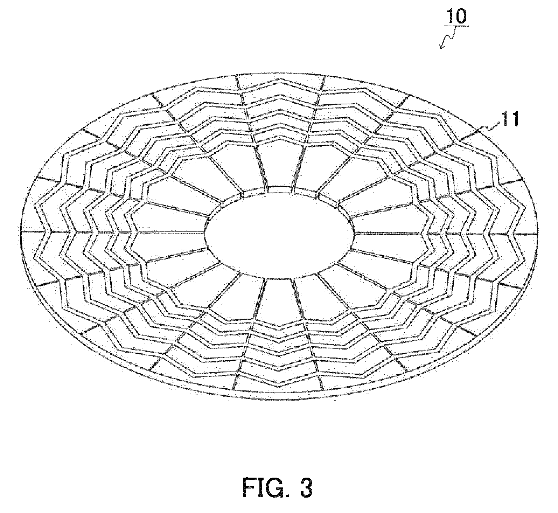

Although the grooves (flow paths) 11 in FIG. 1 are linear grooves, the filter retainer 10 according to the present embodiment is not limited thereto. The filter retainer 10 according to the present embodiment is not limited as long as it has grooves (flow paths) 11 whose widths and depths are reduced from the center toward the outer side in the radial direction. For example, the grooves (flow paths) 11 may be curved grooves such as arc-shaped grooves. Also as shown in FIG. 2, the filter retainer 10 may have grooves (flow paths) 11 that extend linearly in the radial direction and grooves (flow paths) that connect adjacent pairs of the grooves (flow paths) 11 in the circumferential direction. Moreover, as shown in FIG. 3, the filter retainer 10 may have grooves (flow paths) 11 that extend linearly in the radial direction and V-shaped grooves (flow paths) formed between adjacent pairs of the grooves (flow paths) 11 in such a manner that the V-shaped grooves (flow paths) on one surface alternate with the V-shaped grooves (flow paths) on the other surface of the filter retainer 10.

The filter retainer 10 according to the present embodiment may be configured so that each groove (flow path) 11 has the same width on the outer side and on the center side, and the vertical cross-sectional area of each flow path 11 on the outer peripheral side is made smaller than that on the center side only by reducing the depth of each groove (flow path) 11 from the center toward the outer side. The filter retainer 10 according to the present embodiment may be configured so that each groove (flow path) 11 has the same depth on the outer side and on the center side, and the vertical cross-sectional area of each flow path 11 on the outer peripheral side is made smaller than that on the center side only by reducing the width of each groove (flow path) 11 from the center toward the outer side.

A method for producing the filter retainer 10 according to the present embodiment is not particularly limited, and the filter retainer 10 can be produced by, for example, forming grooves (flow paths) on a material for forming the filter retainer 10 such as an approximately circular-shaped SUS plate by chemical etching, press etching, or the like. The conditions of the chemical etching are not particularly limited, and can be set appropriately according to the thickness of the plate, the operation method, and the like. For example, the conditions of the chemical etching may be as follows.

### (Conditions of chemical etching)

Type of etching solution: Ferric chloride
Time: 3.5 to 4 hours
Temperature: 40°C to 60°C
Type of resist: Dry film resist (DFR)
Type of developing solution: Alkaline developing solution
Type of stripping solution: Alkaline stripping solution

A method for using the filter retainer 10 according to the present embodiment is described below. A filter is obtained by arranging a filter medium on each surface of the filter retainer 10 of the present embodiment. This filter alone or a plurality of the filters laminated via spacers can be used as a filter for filtration of a molten polymer, a viscous fluid, or the like. The filter medium is not particularly limited, and a conventionally known filter medium can be used. For example, a sheet-like SUS nonwoven fabric or the like can be used. The filter retainer 10 of the present embodiment is configured so that, as compared with the vertical cross-sectional area of each flow path on the center side where a filtered fluid gathers, the vertical cross-sectional area of each flow path is made smaller on the outer peripheral side where the amount of the filtered fluid is less and the flow rate of the filtered fluid thus is prone to be lowered. With this configuration, it is possible to increase the flow rate of the filtrated fluid on the outer peripheral side, whereby the retention of the filtrated fluid can be suppressed.

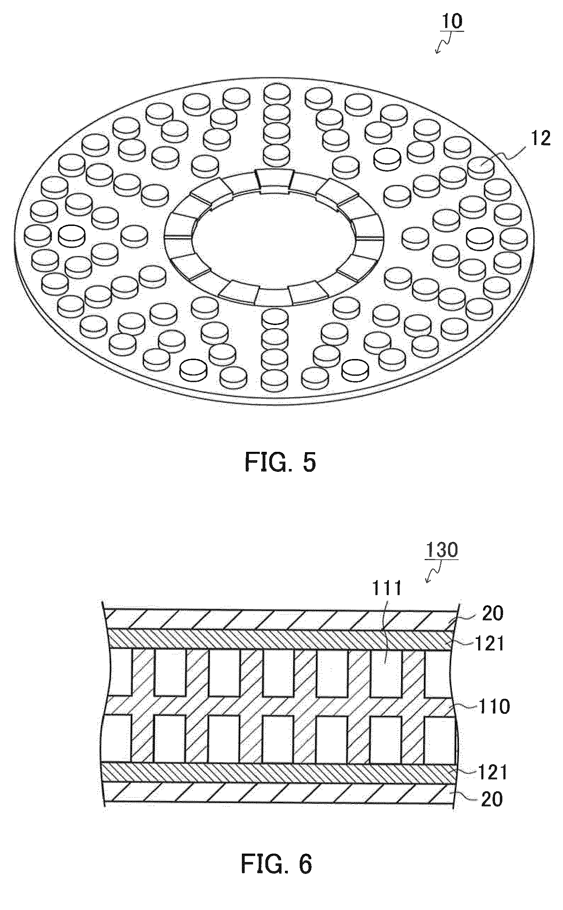

FIG. 6 shows an example of a filter 130 using a conventional filter retainer 110. As shown in FIG. 6, the filter 130 is configured so that porous bodies 121 such as perforated metal sheets are arranged on both surfaces of the filter retainer 110, and filter media 20 are overlaid on the respective porous bodies 121. As shown in FIG. 6, in the conventional filter retainer 110, when the angle formed between a side wall and the bottom of each flow path 111 is a right angle in the cross section of the flow path 111 or when the filter retainer 110 is a wire net, portions having an acute angle, such as wedge-shaped portions, are present in the flow paths. When corners having a right angle or an acute angle are present in the flow paths 111 as described above, the flow rate of a filtrated fluid becomes extremely slow at the corners, so that the retention of the filtered fluid may occurs. Moreover, when the filtered fluid is a molten resin, the deterioration such as gelation may occur. Thus, in the filter retainer 10 according to the present embodiment, it is preferable that, in the cross section of each flow path 11, the angle formed between a side wall and the bottom of each flow path 11 is an obtuse angle, or the side wall and the bottom of the flow path 11 are connected so as to be in an arc shape. Moreover, in the filter using the filter retainer 10 according to the present embodiment, it is preferable that the angle formed between each filter medium and a side wall of each flow path 11 of the filter retainer 10 is an obtuse angle, or each flow path 11 of the filter retainer 10 and each filter medium are connected so as to be in an arc shape. With these configurations, an effect of suppressing the retention of the filtrated fluid can be further enhanced.

The filter retainer 10 according to the present embodiment, including flow paths 11 each having such a cross-sectional shape and a filter 30 using the same are described below with reference to FIGs. 4A to 4D. The filter 30 includes the filter retainer 10 according to the present embodiment and filter media 20 disposed on both surfaces of the filter retainer 10. In the filter retainer 10 shown in FIG. 4A, in the cross section of each flow path 11, an angle formed between a side wall and the bottom of the flow path 11 is an obtuse angle. In the filter retainer 10 shown in FIG. 4B, in the cross section of each flow path 11, the bottom of the flow path 11 is in an arc shape. In the filter 30 shown in FIG. 4C, the angle formed between each filter medium 20 and a side wall of each flow path 11 of the filter retainer 10 is an obtuse angle. In FIGs. 4A and 4C, each encircled portion may be in an arc shape. In the filter 30 shown in FIG. 4D, in the cross section of each flow path 11 of the filter retainer 10, the entire flow path 11 is in an arc shape. As described above, in the cross section of each flow path 11, when the entire flow path 11 is in an arc shape, there is no corner having a right angle or an acute angle in the flow path 11, which is particularly preferable. When the flow paths 11 are formed by chemical etching, the flow paths 11 can have cross sections as shown in FIG. 4D. Moreover, as mentioned above, as shown in FIG. 1, two flow paths 11 formed on both the surfaces of the filter retainer 10 may be integrated at the center side ends.

Moreover, the surface of the filter retainer 10 according to the present embodiment has more flat portions than a wire net or the like used conventionally. Thus, the deformation of the filter media 20 is suppressed, so that it is not necessary to provide a porous body such as a perforated metal sheet between the filter retainer 10 and each of the filter media 20. Therefore, by using the filter retainer 10 according to the present embodiment, the total resistance inside the filter can be reduced. Also in this respect, the retention of the filtrated fluid can be suppressed. Furthermore, by using the filter retainer 10 according to the present embodiment, the number of components used in the filter is reduced, so that the cost for producing the filter can be reduced. Moreover, in the filter retainer 10 according to the present embodiment, for example, only one SUS plate is required as a material, so that the number of operation steps in the production is reduced. Thus, the production can be performed easily with high accuracy.

### (Second embodiment)

FIG. 5 is a perspective view showing a filter retainer according to the present embodiment. As shown in FIG. 5, on both surfaces of the filter retainer 10 according to the present embodiment, a plurality of columnar projections 12 are arranged in the circumferential direction, and rows of the projections 12 are concentrically arranged as four circular rows. In the filter retainer 10 according to the present embodiment, spaces formed between adjacent projections 12 serve as flow paths for a filtrated fluid. The filtrated fluid flows through the flow paths from the outer peripheral side toward the center side. In the radial direction of the filter retainer 10 according to the present embodiment, the number of the projections 12 per unit area on the outer peripheral side is larger than that on the center side whereby the vertical cross-sectional area of each flow path on the outer peripheral side is smaller than that on the center side. The circular rows of the projections 12 are not limited to the four rows shown in FIG. 5, and the number of the circular rows is, for example, in the range from 4 to 500 rows. The number of the projections 12 per unit area in the circular row closest to the center is, for example, from 200000 to 800000 projections/m², preferably from 300000 to 700000 projections/m², and more preferably from 400000 to 600000 projections/m². The number of the projections per unit area in the circular row on the outermost side is, for example, from 300000 to 1200000 projections/m², preferably from 500000 to 1000000 projections/m², and more preferably from 600000 to 900000 projections/m².

The filter retainer according to the present embodiment can be produced in the same manner as for the filter retainer according to the first embodiment. A method for using the filter retainer according to the present embodiment also is the same as that for the filter retainer according to the first embodiment. The filter retainer of the present embodiment also is configured so that, as compared with the vertical cross-sectional area of each flow path on the center side where a filtered fluid gathers, the vertical cross-sectional area of each flow path is made smaller on the outer peripheral side where the amount of the filtered fluid is less and the flow rate of the filtered fluid thus is prone to be lowered. With this configuration, it is possible to increase the flow rate of the filtrated fluid on the outer peripheral side, whereby the retention of the filtrated fluid can be suppressed.

The vertical cross-sectional area of each flow path on the outer peripheral side also can be made smaller than that on the center side by gradually increasing the volume of each projection from the center toward the outer side with no difference in the number of projections between the outer peripheral side and the center side, instead of changing the number of projections between the outer peripheral side and the center side. With this configuration, the same effect as the filter retainer according to the present embodiment also can be obtained. In this case, the volume of the projections per unit area in the circular row closest to the center is, for example, in the range from 80 to 3000 cm³/m², preferably from 240 to 2400 cm³/m², and more preferably from 470 to 1800 cm³/m², and the volume of the projections per unit area in the circular row on the outermost side is, for example, in the range from 0 to 1800 cm³/m², preferably from 80 to 1200 cm³/m², and more preferably from 140 to 700 cm³/m². Such a filter retainer also can be produced and used in the same manner as for the filter retainer according to the first embodiment.

### Industrial Applicability

As described above, according to the present invention, a filter retainer and a filter, capable of suppressing the retention of a filtrated fluid can be obtained. The use of the filter retainer and the filter according to the present invention is not particularly limited, and the filter retainer and the filter are widely applicable to filters for filtration of a molten polymer, a viscous fluid, and the like.

While the present invention has been described above with reference to illustrative embodiments, the present invention is by no means limited thereto. Various changes and modifications that may become apparent to those skilled in the art may be made in the configuration and specifics of the present invention without departing from the scope of the present invention.

This application is based upon and claims the benefit of priority from Japanese patent application No. 2013-93489 filed on April 26, 2013. The disclosure of this Japanese Patent Application is incorporated herein its entirety by reference.

### Explanation of reference numerals

- 10, 110:: filter retainer
- 11, 111:: flow path
- 12:: columnar projection
- 20:: filter medium
- 30, 130:: filter
- 121:: porous body

## Claims

1. A filter retainer that forms flow paths by being sandwiched between two filter media, wherein
the filter retainer is an approximately circular-shaped plate having the flow paths on both surfaces thereof, and
in a radial direction of the filter retainer, a vertical cross-sectional area of each flow path on an outer peripheral side is smaller than that on a center side.

2. The filter retainer according to claim 1, wherein
grooves are formed as the flow paths on both the surfaces of the filter retainer, and
in the radial direction of the filter retainer, the width of each groove on the outer peripheral side is broader than that on the center side, so that the vertical cross-sectional area of each flow path on the outer peripheral side is smaller than that on the center side.

3. The filter retainer according to claim 1, wherein
grooves are formed as the flow paths on both the surfaces of the filter retainer, and
in the radial direction of the filter retainer, the depth of each groove on the outer peripheral side is shallower than that on the center side, so that the vertical cross-sectional area of each flow path on the outer peripheral side is smaller than that on the center side.

4. The filter retainer according to claim 1, wherein
columnar projections are formed on both the surfaces of the filter retainer, and
in the radial direction of the filter retainer, the volume of the projections per unit area on the outer peripheral side is greater than that on the center side, so that the vertical cross-sectional area of each flow path on the outer peripheral side is smaller than that on the center side.

5. The filter retainer according to claim 1, wherein
in a cross section of each flow path, an angle formed between a side wall and a bottom of the flow path is an obtuse angle, or the side wall and the bottom of the flow path are connected so as to be in an arc shape.

6. The filter retainer according to claim 1, wherein
in a cross section of each flow path, at least a bottom of the flow path is in an arc shape.

7. The filter retainer according to claim 1, wherein
the flow paths are formed by chemical etching.

8. A filter comprising:
a filter retainer; and
filter media on both surfaces of the filter retainer, wherein
the filter retainer is the filter retainer according to claim 1.

9. The filter according to claim 8, wherein
an angle formed between each filter medium and a side wall of each flow path of the filter retainer is an obtuse angle, or each flow path of the filter retainer and each filter medium are connected so as to be in an arc shape.
